# EUROPEAN PATENT SPECIFICATION

(11) **EP 4 663 596 B1**
(45) Date of publication and mention of the grant of the patent: **12.08.2026**
(21) Application number: 25176986.5
(22) Date of filing: 16.05.2025
(51) Int. Cl.: B66F 9/075, B66F 9/24, B66F 17/00

(54) **OBSTACLE DETECTION DEVICE**
HINDERNISERKENNUNGSVORRICHTUNG
DISPOSITIF DE DÉTECTION D'OBSTACLE

(30) Priority: 24.05.2024 JP 2024084784
(43) Date of publication of application: 17.12.2025
(73) Proprietor: Kabushiki Kaisha Toyota Jidoshokki, Kariya-shi, Aichi-ken 448-8671 (JP)
(72) Inventor: OKAYAMA, Ken, Kariya-shi, Aichi, 4488671 (JP)
(74) Representative: Hoffmann Eitle

(56) References cited:
- JP-A- 2023 132 153
- US-A- 5 938 710
- US-A1- 2019 197 738

## Description

The present invention relates to an obstacle detection device.

### BACKGROUND ART

An obstacle detection device disclosed in Japanese Patent Application Publication No. 2023-132153 includes a camera and a detection unit. The detection unit obtains a straight line from an image captured by the camera. The detection unit estimates a position of a vanishing point based on the straight line that may form the vanishing point. The detection unit calculates an inclination of the camera from a distance between the vanishing point and a center of the captured image, and a focal length of the camera. When a position of an obstacle is estimated in consideration with the inclination of the camera, an error caused by the inclination of the camera can be corrected.

However, when the obstacle detection device is mounted on a moving body, correcting the inclination may result in a decrease in an accuracy of a position of an obstacle. Therefore, there is a demand for further improvements in the obstacle detection device.

Document US 5 938 710 A discloses the preamble of claim 1.

### SUMMARY

In accordance with an aspect of the present invention, there is provided an obstacle detection device mounted on a moving body. The obstacle detection device include a camera, and a controller. The controller obtains a captured image from the camera. The controller calculates a position of an obstacle based on a feature portion of the captured image and an angle of an optical axis of the camera. The controller does not correct the angle of the optical axis when a specific condition is met, and corrects the angle of the optical axis when the specific condition is not met.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the embodiments together with the accompanying drawings in which:
FIG. 1 is a schematic view of a forklift truck;
FIG. 2 is a schematic configuration view illustrating the forklift truck and an obstacle detection device;
FIG. 3 is a view illustrating an optical axis of a camera;
FIG. 4 is a flowchart showing obstacle position calculation control; and
FIG. 5 is a flowchart showing correction control.

### DETAILED DESCRIPTION OF THE EMBODIMENTS

The following will describe an obstacle detection device according to an embodiment.

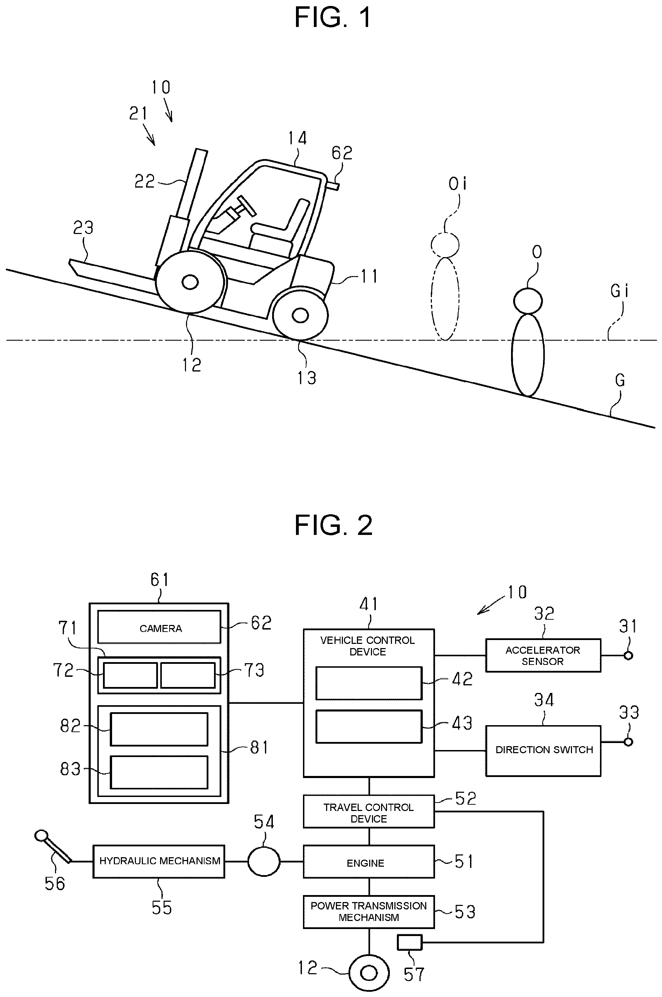

As illustrated in FIG. 1, a forklift truck 10 includes a vehicle body 11, driving wheels 12, a steering wheel 13, and a cargo handling device 21. The forklift truck 10 is an example of a moving body. The moving body may be an industrial vehicle such as the forklift truck 10 or a towing tractor, or may be a passenger vehicle.

The vehicle body 11 includes an overhead guard 14. The overhead guard 14 is disposed, for example, above a driver's seat.

The cargo handling device 21 includes a mast 22 and a fork 23. The fork 23 moves up and down with the mast 22 moving up and down. The fork 23 tilts with tilting of the mast 22. A cargo is to be loaded on the fork 23.

As illustrated in FIG. 2, the forklift truck 10 includes an accelerator operating member 31, an accelerator sensor 32, a direction lever 33, a direction switch 34, a vehicle control device 41, an engine 51, a travel control device 52, a power transmission mechanism 53, a hydraulic pump 54, a hydraulic mechanism 55, a cargo handling lever 56, and a vehicle speed sensor 57.

The accelerator operating member 31 is, for example, an accelerator pedal. The accelerator operating member 31 may be, for example, a lever. The accelerator sensor 32 detects an operation amount of the accelerator operating member 31.

The direction lever 33 determines a traveling direction of the forklift truck 10. The direction lever 33 is operated by a passenger of the forklift truck 10. The direction lever 33 is operated to a forward position which provides instruction on forward movement, or a reverse position which provides instruction on reverse movement, with a neutral position as a reference position. For example, the forward position is a position where the direction lever 33 is tilted forward relative to the neutral position. For example, the reverse position is a position where the direction lever 33 is tilted rearward relative to the neutral position.

The direction switch 34 is switched depending on an operation direction of the direction lever 33. The direction switch 34 has, for example, three contacts. The contacts of the direction switch 34 are switched depending on whether the direction lever 33 is in the neutral position, the forward position, or the reverse position.

The vehicle control device 41 includes a processor 42 and a memory 43. The processor 42 is, for example, a CPU (Central Processing Unit), a GPU (Graphics Processing Unit), or a DSP (Digital Signal Processor). The memory 43 includes a RAM (Random Access Memory) and a ROM (Read Only Memory). The memory 43 stores program codes or commands configured to cause the processor 42 to execute processes. The memory 43, that is, a computer-readable medium, includes any available medium that is accessible by a general-purpose computer or a dedicated computer. The vehicle control device 41 may include a hardware circuit such as an ASIC (Application Specific Integrated Circuit) or an FPGA (Field Programmable Gate Array). The vehicle control device 41, which is a processing circuit, may include one or more processors that operates in accordance with computer programs, one or more hardware circuits such as the ASIC or the FPGA, or a combination thereof.

The engine 51 is a driving power source for a traveling operation and a cargo handling operation of the forklift truck 10.

The travel control device 52 is an engine control unit that controls the engine 51. The travel control device 52 adjusts, for example, an opening degree of a throttle. A driving force of the engine 51 is adjusted by adjusting the opening degree of the throttle.

The power transmission mechanism 53 transmits the driving force of the engine 51 to the driving wheels 12. The power transmission mechanism 53 includes, for example, a torque converter, and a transmission.

The hydraulic pump 54 is driven by the engine 51. The hydraulic pump 54 pumps hydraulic oil from an oil tank.

The hydraulic mechanism 55 distributes hydraulic oil pumped by the hydraulic pump 54. For example, the hydraulic mechanism 55 distributes hydraulic oil to hydraulic cylinders such as a tilt cylinder and a lift cylinder of the cargo handling device 21. The tilt cylinder is a hydraulic cylinder for tilting the mast 22. The lift cylinder is a hydraulic cylinder for moving the mast 22 up and down.

The cargo handling lever 56 is operated by the passenger of the forklift truck 10. The cargo handling lever 56 includes a lift lever that is operated to move the fork 23 up and down, and a tilt lever that is operated to tilt the mast 22. Hydraulic oil is supplied from the hydraulic mechanism 55 to the cargo handling device 21 in response to the operation of the cargo handling lever 56, which operates the cargo handling device 21.

The vehicle speed sensor 57 is a sensor for detecting a vehicle speed of the forklift truck 10. The vehicle speed sensor 57 outputs a pulse signal corresponding to the vehicle speed of the forklift truck 10. A detection result of the vehicle speed sensor 57 is acquired by the travel control device 52. Accordingly, the travel control device 52 can obtain the vehicle speed of the forklift truck 10.

The vehicle control device 41 is configured to be communicable with the travel control device 52. The vehicle control device 41 can obtain the vehicle speed of the forklift truck 10 from the travel control device 52.

The vehicle control device 41 obtains the operation amount of the accelerator operating member 31 from the accelerator sensor 32. The vehicle control device 41 issues a command to the travel control device 52 so that the forklift truck 10 travels at a speed corresponding to the operation amount of the accelerator operating member 31.

The vehicle control device 41 recognizes the position of the direction lever 33 by recognizing which of the contacts of the direction switch 34 is set.

The vehicle control device 41 recognizes a cargo handling state of the forklift truck 10. The cargo handling state of the forklift truck 10 is, for example, whether the cargo handling device 21 is operating or not. The operation of the cargo handling device 21 includes tilting of the mast 22 and movement of the fork 23 up and down.

### Obstacle detection device

An obstacle detection device 61 is mounted on the forklift truck 10. The forklift truck 10 may include one obstacle detection device 61 or a plurality of obstacle detection devices 61.

The obstacle detection device 61 includes a camera 62, an inertial measurement device 71, and a controller 81. The camera 62 and the inertial measurement device 71 are integrated as a unit. Therefore, when the camera 62 is tilted, the inertial measurement device 71 is also tilted in the same manner as the camera 62. The controller 81 may also be integrated with the camera 62 and the inertial measurement device 71 as a unit.

The camera 62 is a digital camera. The camera 62 includes an image sensor. The image sensor is a CCD (Charge Coupled Device) image sensor or a CMOS (Complementary Metal Oxide Semiconductor) image sensor. The camera 62 is a monocular camera.

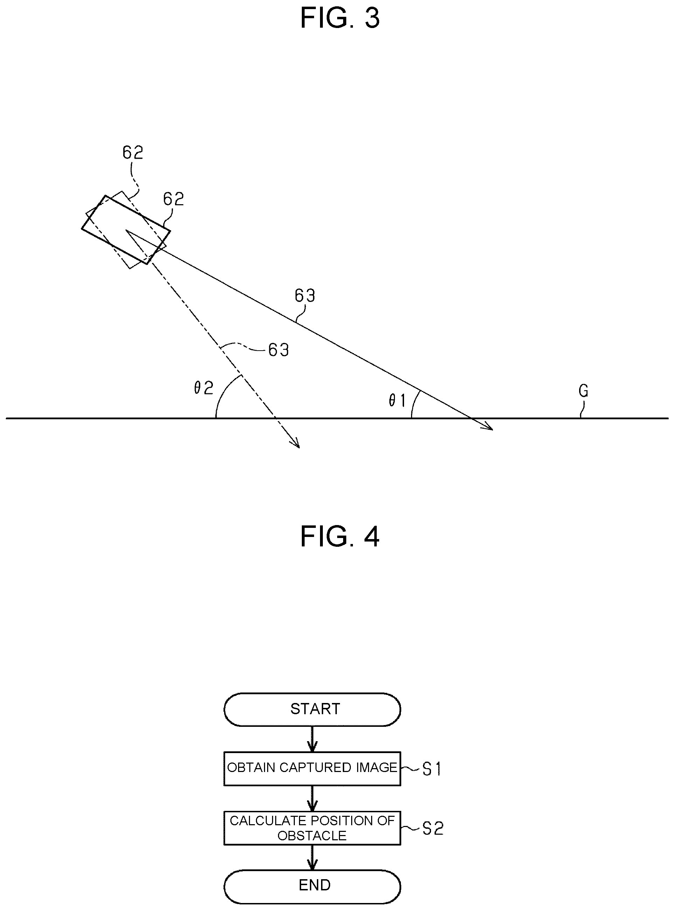

As illustrated in FIG. 3, an optical axis 63 of the camera 62 extends in a direction intersecting with the ground surface G on which the forklift truck 10 travels. The camera 62 is attached to the overhead guard 14, for example. The camera 62 is attached, facing downward. The camera 62 is only required to be attached, facing in a direction in which it is desired to detect an obstacle. If it is desired to detect an obstacle behind the forklift truck 10, the camera 62 may be mounted, facing rearward. If it is desired to detect an obstacle in a lateral direction, the camera 62 may be mounted facing in the lateral direction.

As illustrated in FIG. 2, the inertial measurement device 71 includes an acceleration sensor 72, and a gyro sensor 73. The acceleration sensor 72 is a three-axis acceleration sensor having three axes perpendicular to each other. The acceleration sensor 72 detects acceleration acting on each axis. The gyro sensor 73 is a three-axis gyro sensor having three axes perpendicular to each other. The gyro sensor 73 detects an angular velocity acting on each axis.

The controller 81 includes a hardware configuration similar to that of the vehicle control device 41, for example. The controller 81 includes a processor 82 and a memory 83. The controller 81 is configured to be communicable with the vehicle control device 41 using a vehicle communication protocol. This allows the controller 81 to obtain various pieces of information from the vehicle control device 41.

The controller 81 calculates a position of an obstacle. The position of the obstacle is a position relative to the forklift truck 10, that is, a relative position between the forklift truck 10 and the obstacle. The following will describe obstacle position calculation control.

### Obstacle position calculation control

As shown in FIG. 4, the controller 81 obtains a captured image from the camera 62 at step S1.

Next, in step S2, the controller 81 calculates the position of the obstacle based on a feature portion of the captured image and the angle of the optical axis 63. The feature portion is a portion for extracting an object from the captured image. The feature portion can be detected, for example, from the brightness gradient of the captured image. The controller 81 may extract an obstacle while distinguishing a person from an object other than a person.

The controller 81 converts the coordinates of the obstacle in the captured image into the coordinates of the obstacle in a real space based on the angle of the optical axis 63. Conversion of the coordinates of the obstacle in the captured image into the coordinates of the obstacle in the real space based on the angle of the optical axis may be made using known techniques. The angle of the optical axis 63 is the angle of the optical axis 63 relative to the ground surface G on which the forklift truck 10 travels. In other words, the angle of the optical axis 63 corresponds to an angle formed by the optical axis 63 and a plane parallel to the ground surface G on which the forklift truck 10 travels. The coordinates in the real space may be expressed in Cartesian coordinates or polar coordinates. The coordinates in the real space may be two-dimensional coordinates or three-dimensional coordinates.

As described above, the controller 81 calculates the position of the obstacle using the angle of the optical axis 63. The angle of the optical axis 63 can be obtained in advance. Thus, by storing the angle of the optical axis 63 in a storage medium such as the memory 83, the position of the obstacle can be calculated. As illustrated in FIG. 3, when the angle of the optical axis 63 changes from a known angle θ1 to an unknown angle θ2, a difference occurs between the actual position of the obstacle and the position of the obstacle calculated by the obstacle position calculation control. This may cause a decrease in accuracy of the position of the obstacle.

The controller 81 corrects the angle of the optical axis 63 when the angle of the optical axis 63 changes from the known angle θ1. This may reduce an error in detection of the position of the obstacle even if the angle of the optical axis 63 changes from the known angle θ1.

### Correction control

The following will describe correction control in which the angle of the optical axis 63 is corrected.

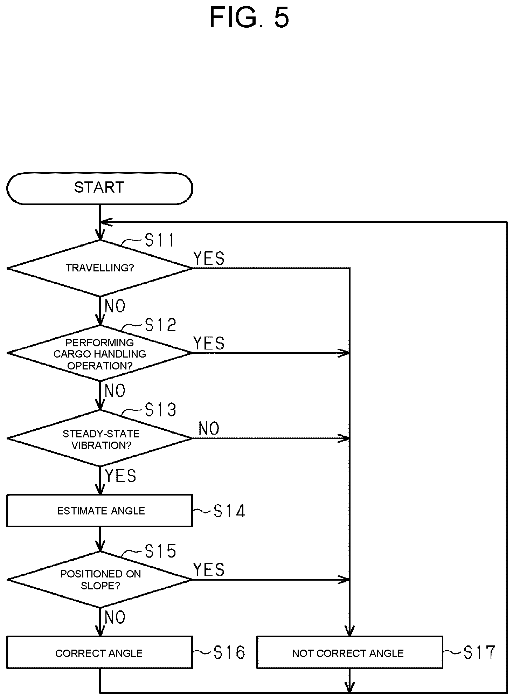

As shown in FIG. 5, in step S11, the controller 81 determines whether or not the forklift truck 10 is traveling. Whether or not the forklift truck 10 is traveling may be determined based on the vehicle speed of the forklift truck 10. The controller 81 determines that the forklift truck 10 is traveling when the vehicle speed of the forklift truck 10 is equal to or greater than a travel determination threshold value. The controller 81 determines that the forklift truck 10 is at a stop when the vehicle speed of the forklift truck 10 is less than the travel determination threshold value. The vehicle speed of the forklift truck 10 may be obtained by acquiring the detection result of the vehicle speed sensor 57 from the vehicle control device 41. The travel speed determination threshold value is set within a range between 0 [km/h] and 0.5 [km/h], for example. When it is determined NO in step S11, the controller 81 proceeds to step S12. When it is determined YES in step S11, the controller 81 proceeds to step S17.

In step S12, the controller 81 determines whether or not the forklift truck 10 is performing a cargo handling operation. Whether or not the forklift truck 10 is performing the cargo handling operation can be determined from the cargo handling state. The cargo handling state can be obtained from the vehicle control device 41. The vehicle control device 41 determines that the cargo handling operation is being performed when the cargo handling device 21 is in operation. The vehicle control device 41 determines that the cargo handling operation is not being performed when the cargo handling device 21 is not in operation. If it is determined NO in step S12, the controller 81 proceeds to step S13. If it is determined YES in step S12, the controller 81 proceeds to step S17.

In step S13, the controller 81 determines whether or not vibration occurring in the forklift truck 10 is a steady-state vibration. The steady-state vibration corresponds to vibration generated even when the moving body is not travelling. In a moving body having the cargo handling device 21 such as the forklift truck 10, the steady-state vibration occurs even when the moving body is neither traveling nor performing the cargo handling operation. In contrast, a non-steady-state vibration occurs when an external impact or external vibration is applied to the forklift truck 10, and vibration caused by such an external impact or external vibration does not subside. When the vibration is not the steady-state vibration, the vibration is the non-steady-state vibration. The steady-state vibration is, for example, vibration caused by idling the engine 51. Whether or not the vibration is the steady-state vibration can be determined from the detection result of the inertial measurement device 71.

The controller 81 determines that the vibration is the steady-state vibration when amplitude of the vibration detected by the inertial measurement device 71 is equal to or less than a vibration threshold value for consecutive designated frames within immediate designated frames. The controller 81 determines that the vibration is the non-steady-state vibration when amplitude of the vibration detected by the inertial measurement device 71 is greater than the vibration threshold value for the consecutive designated frames within the immediate designated frames. The number of the designated frames can be set arbitrarily. For example, the number of the designated frames is set so that, when vibration or an impact is applied to the forklift truck 10 from outside, whether or not the vibration caused by this has subsided can be determined.

The amplitude of vibration detected by the inertial measurement device 71 may be at least one of the amplitude of acceleration detected on each axis by the acceleration sensor 72 and the amplitude of angular velocity detected on each axis by the gyro sensor 73.

When it is determined YES in step S13, the controller 81 proceeds to step S14. When it is determined NO in step S13, the controller 81 proceeds to step S17.

In step S14, the controller 81 estimates the angle of the optical axis 63. The gravitational acceleration acts on each axis of the acceleration sensor 72. With respect to each axis of the acceleration sensor 72, a component of the gravitational acceleration depending on the inclination relative to the direction of gravy is detected. Since the camera 62 and the inertial measurement device 71 are inclined together, when the angle of the optical axis 63 is changed, the magnitude of the gravitational acceleration detected on each axis of the acceleration sensor 72 changes. When the forklift truck 10 is not traveling or performing the cargo handling operation, the acceleration acting on the acceleration sensor 72 can be considered as the gravitational acceleration. The controller 81 estimates the angle of the optical axis 63 from the magnitude of the gravitational acceleration detected on each axis of the acceleration sensor 72.

The controller 81 may correct the estimated angle of the optical axis 63 by using the detection result by the gyro sensor 73. The controller 81 may also estimate an amount of change in the angle of the optical axis 63 from the acceleration detected on each axis of the acceleration sensor 72. For example, the amount of change in the angle of the optical axis 63 can be estimated from the difference between the acceleration detected on each axis of the acceleration sensor 72 in a state in which the inclination of the optical axis 63 is not changed and the acceleration detected on each axis of the acceleration sensor 72 in a state in which the inclination of the optical axis 63 is changed.

When the angle of the optical axis 63 is estimated, an influence of vibration may be eliminated by a hardware filter or a software filter. When the angle of the optical axis 63 is estimated, the steady-state vibration occurs in the forklift truck 10 in some case. In this case, noise may be contained in the acceleration detected by the acceleration sensor 72 and the angular velocity detected by the gyro sensor 73. This noise may be removed by the hardware filter or the software filter. Then, the angle of the optical axis 63 may be estimated from the acceleration and angular velocity after noise has been removed.

Next, in step S15, the controller 81 determines whether or not the forklift truck 10 is positioned on a slope. Whether or not the forklift truck 10 is present on a slope can be determined from the amount of change in the angle of the optical axis 63.

For example, a change in the angle of the optical axis 63 may be caused by the following factors.

A change in a mounting angle of the camera 62 caused by loosening of a bracket and a bolt for fixing the camera 62 due to deterioration over time. The change in the mounting angle of the camera caused by application of load to the camera 62, for example, when a passenger of the forklift truck 10 hits the camera 62. A change in the inclination of the vehicle body 11 caused by wear of tires of the driving wheels 12 and the steering wheel 13. A change in the inclination of the vehicle body 11 caused by a load loaded on the fork 23. A change in the inclination of the vehicle body 11 caused by the forklift truck 10 climbing on a step. Vibration of at least one of the camera 62 and the vehicle body 11 due to an impact or vibration.

When the forklift truck 10 is on a slope, the angle between the ground surface G and the optical axis 63 is not changed from the known angle θ1. However, the inclination of the forklift truck 10 in accordance with the inclination of the slope changes the magnitude of the gravitational acceleration detected on each axis of the acceleration sensor 72. Therefore, even if the angle of the optical axis 63 relative to the ground surface G does not change, the angle of the optical axis 63 with respect to the direction of gravity changes. As a result, a value different from the known angle θ1 is estimated when the angle of the optical axis 63 is estimated in step S14.

When the amount of change in the angle of the optical axis 63 exceeds a threshold value, the controller 81 determines that the forklift truck 10 is on a slope. The amount of change in the angle of the optical axis 63 corresponds to a difference between the known angle θ1 and the estimated angle of the optical axis 63. The amount of change in the angle of the optical axis 63 when the forklift truck 10 is on a slope is greater than the amount of the change in the angle of the optical axis 63 caused by the above mentioned factors. For this reason, the threshold value is a value obtained by accumulating the amount of change in the angle of the optical axis 63 caused by the above-mentioned factors using the square root of the sum of the squares.

When it is determined NO in step S15, the controller 81 proceeds to step S16. When it is determined YES in step S15, the controller 81 proceeds to step S17.

In step S16, the controller 81 corrects the angle of the optical axis 63. For example, in the obstacle position calculation control, the controller 81 calculates the position of the obstacle using the angle of the optical axis 63 estimated in step S14.

In step S17, the controller 81 does not correct the angle of the optical axis 63. In this case, the controller 81 may be configured to calculate the position of the obstacle using the known angle θ1 of the optical axis 63 in the obstacle position calculation control. The controller 81 may calculate the position of the obstacle using the angle of the optical axis 63 which has just been corrected in step S16.

When the process of step S16 or step S17 is completed, the controller 81 returns to step S11. The correction control is repeatedly performed while the forklift truck 10 is in operation.

As has been described above, the controller 81 does not correct the angle of the optical axis 63 when a specific condition is met, and corrects the angle of the optical axis 63 when the specific condition is not met. The forklift truck 10 is in operation when the forklift truck 10 is traveling or when the forklift truck 10 is performing a cargo handling operation. The specific condition includes a condition that the forklift truck 10 is in operation. The specific condition includes a condition that vibration occurring in the forklift truck 10 is not the steady-state vibration. The specific condition includes a condition that the forklift truck 10 is positioned on a slope. The specific condition only has to include at least one of the above.

### Operation of present embodiment

In a case where the controller 81 corrects the angle of the optical axis 63, the correction by the controller 81 may result in a decrease in the accuracy of the position of the obstacle. For example, when the forklift truck 10 is traveling or performing a cargo handling operation, large vibration occurs in the forklift truck 10. This vibration becomes disturbance, which causes the acceleration detected by the acceleration sensor 72 and the angular velocity detected by the gyro sensor 73 to contain large noise. This may result in a large deviation amount even if the angle of the optical axis 63 is estimated using the acceleration sensor 72 and the gyro sensor 73. The same is true for the non-steady-state vibration.

As illustrated in FIG. 1, when the forklift truck 10 is positioned on a slope, the angle between the ground surface G and the optical axis 63 does not change. Therefore, by performing the obstacle position calculation control without correcting the angle of the optical axis 63, the position of an obstacle O located on the ground surface G where the forklift truck 10 is present can be correctly calculated. When the angle of the optical axis 63 is corrected, the correction is performed based on the gravitational acceleration. That is, when the angle of the optical axis 63 is corrected, it is determined that an obstacle Oi is located on a flat surface Gi perpendicular to the gravitational acceleration.

As described above, the specific condition includes a state in which the detection result of the acceleration sensor 72 or the gyro sensor 73 contains large noise, or a state in which the angle between the optical axis 63 and the gravitational direction changes even though the angle between the optical axis 63 and the ground surface G does not change. In a case where the specific condition is met, the accuracy of the position of the obstacle is decreased by correcting the optical axis 63. Therefore, the correction of the optical axis 63 is not performed when the specific condition is met.

### Effects of present embodiment

(1) In the case where the specific condition is met, the angle of the optical axis 63 is not corrected. This suppresses a decrease in the accuracy of the position of the obstacle, which may be caused by correcting the angle of the optical axis 63 when the specific condition is met.
(2) The camera 62 is a monocular camera. As compared with a case where a stereo camera is used as the camera 62, the manufacturing costs can be reduced.
(3) The specific condition includes the condition that the forklift truck 10 is in operation. When the forklift truck 10 is in operation, the detection results of the acceleration sensor 72 and the gyro sensor 73 contain large noise. Therefore, by not correcting the optical axis 63 when the forklift truck 10 is in operation, the decrease in the accuracy of the position of the obstacle caused by correcting the angle of the optical axis 63 may be suppressed.
(4) The specific condition includes the condition that vibration occurring in the forklift truck 10 is not the steady-state vibration. When the vibration occurring in the forklift truck 10 is not the steady-state vibration, the detection results of the acceleration sensor 72 and the gyro sensor 73 contain large noise. Therefore, when the vibration occurring in the forklift truck 10 is not the steady-state vibration, the correction of the optical axis 63 is not performed. As a result, the decrease in the accuracy of the position of the obstacle caused by correcting the angle of the optical axis 63 may be suppressed.
(5) The specific condition includes the condition that the forklift truck 10 is positioned on a slope. When the forklift truck 10 is positioned on a slope, the position of the obstacle located on the ground surface G on which the forklift truck 10 is present can be correctly calculated without correcting the angle of the optical axis 63. Therefore, when the forklift truck 10 is positioned on a slope, the correction of the optical axis 63 is not performed. As a result, the decrease in the accuracy of the position of the obstacle caused by correcting the angle of the optical axis 63 may be suppressed.

### Modifications

The present embodiment may be modified in various manners, as exemplified below. The present embodiment and the following modifications may be implemented in combination with each other within a technically consistent range.

In step S11, the controller 81 may determine, based on the operation amount of the accelerator operating member 31, whether or not the forklift truck 10 is traveling. The operation amount of the accelerator operating member 31 may be obtained from the vehicle control device 41. The controller 81 determines that the forklift truck 10 is traveling when the operation amount of the accelerator operating member 31 is equal to or greater than an accelerator operation amount threshold value. The accelerator operation amount threshold value is set to exclude a small operation amount. The controller 81 may use both the vehicle speed and the operation amount of the accelerator operating member 31 to make a determination in step S11.

When the accelerator operating member 31 is operated with the direction lever 33 in the neutral position, vibration occurs in the forklift truck 10 even though the forklift truck 10 is not traveling. In this case, if the angle of the optical axis 63 is corrected, the accuracy of the position of the obstacle may decrease due to the influence of vibration. When determination in step S11 is made using the operation amount of the accelerator operating member 31, it is possible to prevent the angle of the optical axis 63 from being corrected in a case where the accelerator operating member 31 is operated with the direction lever 33 in the neutral position.

In step S12, the controller 81 may determine whether or not the forklift truck 10 is performing the cargo handling operation based on the operation amount of the cargo handling lever 56. In this case, the forklift truck 10 includes a sensor that detects the operation amount of the cargo handling lever 56. The controller 81 determines that the forklift truck 10 is performing the cargo handling operation when the operation amount of the cargo handling lever 56 is equal to or greater than a cargo handling operation amount threshold value. The cargo handling operation amount threshold value is set to exclude a small operation amount. The controller 81 may make a determination in step S12 using both a state of cargo handling operation and the operation amount of the cargo handling lever 56.

In step S13, the controller 81 may estimate the angle of the optical axis 63 from the detection result of the inertial measurement device 71, and determine that the vibration is the steady-state vibration when the estimated angle of the optical axis 63 is equal to or less than an angle threshold value for the consecutive designated frames. The angle threshold value is a predetermined value. The angle threshold value is set so that the whether vibration is in the steady-state vibration or the non-steady-state vibration can be determined. When noise due to vibration is included in the detection results of the acceleration sensor 72 and the gyro sensor 73, the estimated angle of the optical axis 63 increases, which makes the angle of the optical axis 63 exceed the angle threshold value. Therefore, whether or not the vibration is the steady-state vibration is determined using the angle threshold value.

Step S13 may be omitted by providing a low-pass filter that removes large vibration and impact. In this case, the processing speed of the correction control may be improved. In addition, implementation may be easier.

In step S15, the controller 81 may determine whether or not the forklift truck 10 is positioned on a slope based on the result of self-position estimation. For example, the controller 81 may compare map data that stores slope positions in a location where the forklift truck 10 is operated with a self-position estimated by the self-position estimation on the map data. The self-position estimation may be performed by the vehicle control device 41. The map data is stored in a memory device that can be read by the controller 81 or the vehicle control device 41.

In step S15, the controller 81 may determine whether or not the forklift truck 10 is positioned on a slope based on the detection result of a ground distance sensor. The ground distance sensors are provided, for example, at two locations which are spaced in the front-rear direction of the forklift truck 10. When the forklift truck 10 approaches a slope from a flat ground, a difference occurs between the distances to the ground surface G detected by the two ground distance sensors. The controller 81 may determine whether or not the forklift truck 10 is positioned on a slope based on the difference between the distances to the ground surface G detected by the two ground distance sensors.

When the forklift truck 10 is shipped, the angle of the optical axis 63 may be estimated with the forklift truck 10 placed on a flat surface plate. This angle of the optical axis 63 may then be stored in the memory 83 as a known angle θ1. As compared to a case where an operator measures the angle of the optical axis 63, work efficiency can be improved.

The camera 62 may be a stereo camera.

The forklift truck 10 may be driven by a motor.

### Definition

In the present specification, the wording "at least one" means "one or more" desirable options. In one example, if there are two options, "at least one" used herein means "one of the options" or "both of the two options". In another example, if there are three or more options, "at least one" used herein means "one of the options" or "a combination of any two or more desirable options".

## Claims

1. An obstacle detection device (61) mounted on a moving body (10), the obstacle detection device (61) comprising:
a camera (62); and
a controller (81), **characterized in that**
the controller (81) obtains a captured image from the camera (62),
the controller (81) calculates a position of an obstacle (O) based on a feature portion of the captured image and an angle of an optical axis (63) of the camera (62), **characterized in that**,
the controller (81) does not correct the angle of the optical axis (63) when a specific condition is met, and corrects the angle of the optical axis (63) when the specific condition is not met.

2. The obstacle detection device (61) according to claim 1, **characterized in that**
the camera (62) is a monocular camera (62), and
the optical axis (63) extends in a direction in which the optical axis (63) intersects a ground surface (G) on which the moving body (10) travels.

3. The obstacle detection device (61) according to claim 1, **characterized in that**
the specific condition includes a condition that the moving body (10) is in operation.

4. The obstacle detection device (61) according to claim 1, **characterized in that**
the moving body (10) includes an engine (51), and
the specific condition includes a condition that vibration occurring in the moving body (10) is not a steady-state vibration.

## Patentansprüche

1. Hinderniserkennungsvorrichtung (61), montiert auf einem sich bewegenden Körper (10), wobei die Hinderniserkennungsvorrichtung (61) Folgendes umfasst:
eine Kamera (62); und
eine Steuereinheit (81), **dadurch gekennzeichnet, dass**
die Steuereinheit (81) ein erfasstes Bild von der Kamera (62) erhält,
die Steuereinheit (81) eine Position eines Hindernisses (O) basierend auf einem Merkmalsabschnitt des erfassten Bildes und einem Winkel einer optischen Achse (63) der Kamera (62) berechnet, **dadurch gekennzeichnet, dass**,
die Steuereinheit (81) den Winkel der optischen Achse (63) nicht korrigiert, wenn eine spezifische Bedingung erfüllt ist, und den Winkel der optischen Achse (63) korrigiert, wenn die spezifische Bedingung nicht erfüllt ist.

2. Hinderniserkennungsvorrichtung (61) nach Anspruch 1, **dadurch gekennzeichnet, dass**
die Kamera (62) eine monokulare Kamera (62) ist, und
die optische Achse (63) sich in eine Richtung erstreckt, in der die optische Achse (63) eine Bodenoberfläche (G) schneidet, auf der der sich bewegende Körper (10) fährt.

3. Hinderniserkennungsvorrichtung (61) nach Anspruch 1, **dadurch gekennzeichnet, dass**
die spezifische Bedingung eine Bedingung einschließt, dass der sich bewegende Körper (10) in Betrieb ist.

4. Hinderniserkennungsvorrichtung (61) nach Anspruch 1, **dadurch gekennzeichnet, dass**
der sich bewegende Körper (10) einen Motor (51) einschließt, und
die spezifische Bedingung eine Bedingung einschließt, dass die in dem sich bewegenden Körper (10) auftretende Vibration keine stationäre Vibration ist.

## Revendications

1. Dispositif de détection d'obstacle (61) monté sur un corps mobile (10), le dispositif de détection d'obstacle (61) comprenant :
une caméra (62) ; et
un dispositif de commande (81), **caractérisé en ce que**
le dispositif de commande (81) obtient une image capturée à partir de la caméra (62),
le dispositif de commande (81) calcule une position d'un obstacle (O) sur la base d'une partie caractéristique de l'image capturée et d'un angle d'un axe optique (63) de la caméra (62), **caractérisé en ce que**,
le dispositif de commande (81) ne corrige pas l'angle de l'axe optique (63) lorsqu'une condition spécifique est remplie, et corrige l'angle de l'axe optique (63) lorsque la condition spécifique n'est pas remplie.

2. Dispositif de détection d'obstacle (61) selon la revendication 1, **caractérisé en ce que**
la caméra (62) est une caméra monoculaire (62), et
l'axe optique (63) s'étend dans une direction dans laquelle l'axe optique (63) coupe une surface au sol (G) sur laquelle se déplace le corps mobile (10).

3. Dispositif de détection d'obstacle (61) selon la revendication 1, **caractérisé en ce que**
la condition spécifique inclut une condition selon laquelle le corps mobile (10) est en fonctionnement.

4. Dispositif de détection d'obstacle (61) selon la revendication 1, **caractérisé en ce que**
le corps mobile (10) inclut un moteur (51), et
la condition spécifique inclut une condition selon laquelle une vibration se produisant dans le corps mobile (10) n'est pas une vibration en régime permanent.
